# EUROPÄISCHE PATENTSCHRIFT

(11) **EP 2 836 912 B1**
(45) Veröffentlichungstag und Bekanntmachung des Hinweises auf die Patenterteilung: **12.08.2020**
(21) Anmeldenummer: 13713917.6
(22) Anmeldetag: 04.04.2013
(51) Int. Cl.: G06F 11/07, G06F 12/14

(54) **TEILNEHMERSTATION FÜR EIN BUSSYSTEM UND VERFAHREN ZUR ÜBERTRAGUNG VON NACHRICHTEN ZWISCHEN TEILNEHMERSTATIONEN EINES BUSSYSTEMS**
SUBSCRIBER STATION FOR A BUS SYSTEM AND METHOD FOR TRANSMITTING MESSAGES BETWEEN SUBSCRIBER STATIONS OF A BUS SYSTEM
STATION DE PARTICIPANT AU BUS POUR UN SYSTÈME DE BUS ET PROCÉDÉ DE TRANSMISSION DE MESSAGES ENTRE DES STATIONS DE PARTICIPANTS AU BUS D'UN SYSTÈME DE BUS

(30) Priorität: 12.04.2012 DE 102012205988
(43) Veröffentlichungstag der Anmeldung: 18.02.2015
(73) Patentinhaber: Robert Bosch GmbH, 70442 Stuttgart (DE)
(72) Erfinder: HARTWICH, Florian, 72762 Reutlingen (DE)
(86) Internationale Anmeldenummer: PCT/EP2013/057101
(87) Internationale Veröffentlichungsnummer: WO 2013/152987

(56) Entgegenhaltungen:
- WO-A2-2006/040014
- US-A1- 2005 229 020
- Nn: "Core1553BBC MIL-STD-1553B Bus Controller", , 1. Januar 2005 (2005-01-01), Seiten 1-30, XP055065766, Gefunden im Internet: URL:http://www.actel.com/ipdocs/Core1553BB C_DS.pdf [gefunden am 2013-06-07]
- Nn: "signal.h - signals", The Open Group Base Specifications Issue 6 IEEE Std 1003.1, 2004 Edition, 1. Januar 2004 (2004-01-01), Seiten 1-8, XP055065765, Gefunden im Internet: URL:http://pubs.opengroup.org/onlinepubs/0 09695399/basedefs/signal.h.html [gefunden am 2013-06-07]

## Beschreibung

### Technisches Gebiet

Die vorliegende Erfindung betrifft eine Teilnehmerstation für ein Bussystem und ein Verfahren zur Übertragung von Nachrichten zwischen Teilnehmerstationen eines Bussystems, bei welchen insbesondere Speicherzugriffsfehler gelöst werden können.

### Stand der Technik

Es ist ein Bussystem bekannt, bei welchem Nachrichten mittels des CAN-Protokolls übertragen werden, wie es in der CAN-Spezifikation in der ISO11898 beschrieben ist.

DE 100 00 305 A1 beschreibt das CAN (Controller Area Network = Steuereinrichtungsnetzwerk) sowie eine als TTCAN (Time Triggered CAN = Zeit getriggertes CAN) bezeichnete Erweiterung des CAN.

CAN und TTCAN arbeiten mit einem nachrichtenbasierten Protokoll und kommen beispielsweise in Fahrzeugen zum Einsatz. Ein auf CAN oder TTCAN basierendes Bussystem ermöglicht allen mit ihm verbundenen Teilnehmerstationen, wie beispielsweise Mikrocontrollern, miteinander zu kommunizieren.

Das Dokument "Core1553BBC MIL-STD-1553B Bus Controller" der Firma Actel (siehe http://www.actel.com/ipdocs/Core1553BBD DS.pdf) offenbart einen Buscontroller demäß dem Busprotokoll MIL-STD-1553.

US 2005/229020 A1 beschreibt ein Verfahren zur Fehlerbehandlung in Embedded Prozessoren, wobei Informationen über den Fehler abgelegt und mit evtl. früher aufgetretenen Fehlern verglichen werden, um entsprechende Maßnahmen einzuleiten.

WO 2006/040014 A2 offenbart eine Systemüberwachungseinheit für ein Steuerungsgerät mit Mikroprozessor. Hierbei werden dem Mikroprozessor abhängig von seinem Betriebsmodus ("User" oder "Supervisor") unterschiedliche Schreib- und Leseberechtigungen für Zugriffe auf Peripheriegeräte eingeräumt.

Die Open Group Base Specification Issue 6, IEEE Std 1003.1, 2004 Edition, (siehe http://pub.opengroup.org/onlinepubs/009695399/basedefs/signal.h.html) offenbart eine SW-Implementierung eines Signal-Handlings im Falle einer Speicherzugriffsverletzung.

Im aktuellen CAN Protokoll (ISO 11898-1) ist die Größe des Datenfelds auf 8 Byte beschränkt. Daher sind auch die Nachrichtenspeicher (Mailboxen) der Teilnehmerstationen des CAN, die auch als Hardware-CAN-Module bezeichnet werden können, auf 8 Datenbytes (Data-Bytes) beschränkt. Das beispielsweise am 02.05.2011 auf der Internet-Seite http://www.semiconductors.bosch.de/ veröffentlichte Dokument "CAN with Flexible Data-Rate, White Paper, Version 1.0" stellt ein gegenüber der ISO 11898-1 modifiziertes Datenübertragungsprotokoll vor, welches unter anderem eine Vergrößerung des Datenfeldes, sowie für einen Teil der CAN-Nachricht nach erfolgter Arbitrierung eine Verkürzung der Bitlänge ermöglicht.

Die Nachrichtenspeicher können als RAM (Random Access Memory = Speicher mit wahlfreiem Zugriff) oder als Registerzellen realisiert sein. Hierbei ist es möglich, die Nachrichtenspeicher in einem externen RAM zu realisieren. In diesem Fall sind in der Teilnehmerstation Zwischenspeicher vorgesehen, in denen eine komplette CAN-Nachricht abgelegt wird, bevor diese CAN-Nachricht über den CAN-Bus gesendet wird. Die in dem Zwischenspeicher zu speichernde CAN-Nachricht wird wortweise aus dem RAM geladen. Die Übertragung der Nachricht beginnt erst dann, wenn der Zwischenspeicher vollständig geladen ist. Der Zwischenspeicher verhindert, dass der CAN-Protokoll-Controller einer Teilnehmerstation bei einer laufenden Übertragung an einen Punkt gelangt, an dem er keine gültigen Datenbytes zur Verfügung hat, weil z.B. das RAM einen Datenfehler meldet (Parity-Error) oder weil sich das Auslesen des RAMs aufgrund von Zugriffskonflikten verzögert.

Problematisch ist jedoch, dass im CAN-Protokoll die Möglichkeit eines Speicherzugriffsfehlers nicht berücksichtigt ist. Ein Abbruch der laufenden Übertragung wäre eine Verletzung des CAN-Protokolls, eine andere Signalisierung der Ungültigkeit der Daten ist nicht vorgesehen.

Als Lösung dieses Problems werden derzeit beispielsweise eine Binnen-CRC Checksumme oder andere Prüfdaten mit im Datenfeld versendet, um den Datenpfad innerhalb des CAN-Systems abzusichern. Dies reduziert jedoch die Nutzdatenrate und belastet die Applikationssoftware.

### Offenbarung der Erfindung

Daher ist es Aufgabe der vorliegenden Erfindung, eine Teilnehmerstation für ein Bussystem und ein Verfahren zur Übertragung von Nachrichten zwischen Teilnehmerstationen eines Bussystems bereitzustellen, welche Speicherzugriffsfehler im CAN-Bussystem berücksichtigen und insbesondere mit geringer Reduktion der Nutzdatenrate und Belastung der Applikationssoftware gelöst werden können.

Die Aufgabe wird durch eine Teilnehmerstation für ein Bussystem zum Übertragen von Nachrichten mittels des CAN-Protokolls mit den Merkmalen des Anspruchs 1 gelöst. Die Teilnehmerstation umfasst einen Mikrocontroller mit einem RAM, einen CAN-Controller zum Lesen von zu sendenden Daten einer Nachricht direkt aus dem RAM ohne Zwischenspeicherung in einem Zwischenspeicher, und eine Speicherzugriffsfehler-Erfassungs/Bearbeitungseinrichtung zur Erfassung eines Speicherzugriffsfehlers des CAN-Controllers und zur Bearbeitung eines erfassten Speicherzugriffsfehlers.

Mit der beschriebenen Teilnehmerstation kann mit einem (Norm-)CAN-Protokoll-Controller oder CAN-FD-Protokoll-Controller protokollgerecht auf einen Speicherzugriffsfehler reagiert werden, wobei das CAN- oder das CAN-FD-Protokoll abgewandelt wird. Mit der beschriebenen Teilnehmerstation wird vermieden, dass die Empfänger einer Nachricht, die ungültige Daten enthält, die ungültigen Daten fälschlich für gültig halten.

Zudem können Zwischenspeicher eingespart werden, da die Nachricht während der laufenden Übertragung direkt aus einem RAM ohne Verwendung eines Zwischenspeichers gelesen wird Da die Zwischenspeicher bisher in einem CAN-FD-Controller statt 8 Data Bytes bis zu 64 Data-Bytes vorhalten müssen, kann durch Einsparen des Zwischenspeichers der Flächenbedarf eines voll ausgebauten CAN-FD-Controllers signifikant reduziert werden. Dieser Flächenbedarf wäre andernfalls wesentlich größer als der eines Norm-CAN-Controllers.

Vorteilhafte weitere Ausgestaltungen der Teilnehmerstation sind in den abhängigen Patentansprüchen angegeben.

Bevorzugt ist die Speicherzugriffsfehler-Erfassungs/Bearbeitungseinrichtung zur Bearbeitung des erfassten Speicherzugriffsfehlers ausgestaltet, indem sie einen Fehlercode setzt. Hierbei kann der CAN-Controller zudem eine vorbestimmte Maßnahme ausführen, wenn die Speicherzugriffsfehler-Erfassungs/Bearbeitungseinrichtung den Fehlercode gesetzt hat.

Es ist möglich, dass der Speicherzugriffsfehler ein Parity-Fehler im RAM oder ein ECC-Fehler oder ein zeitlicher Fehler oder ein Datenkonsistenzfehler ist. Hierbei kann der zeitliche Fehler ein Fehler sein, bei welchem ein von dem CAN-Controller gelesenes RAM-Speicherwort nicht rechtzeitig bereitgestellt wird, bevor das erste Bit dieses Speicherworts auf einem CAN-Bus des Bussystems gesendet werden soll, und der Datenkonsistenzfehler kann ein Fehler sein, bei welchem der Inhalt der Nachricht von einer Software verändert wird, während das Senden der Nachricht in Gang ist.

Es ist von Vorteil, wenn die vorbestimmte Maßnahme ist, dass der CAN-Controller in den Bus-Monitoring-Mode wechselt und hierfür der CAN-Controller zum Wechsel in den Bus-Monitoring-Mode ausgestaltet ist. Damit kann der Fehler behoben werden und die Nutzdatenrate im Bussystem wird nicht beeinträchtigt.

Alternativ kann die vorbestimmte Maßnahme sein, dass der CAN-Controller beim Senden einer Nachricht diese Nachricht durch einen Fehlerabschnitt oder noch weiter alternativ durch einen Überlastabschnitt unterbricht und hierfür der CAN-Controller zum Unterbrechen des Datenabschnitts der Nachricht mit einem Fehlerabschnitt oder noch weiter alternativ einem Überlastabschnitt ausgestaltet ist.

Gemäß einer weiteren Alternative kann die vorbestimmte Maßnahme sein, dass der CAN-Controller beim Senden einer Nachricht eine ungültige Prüfsumme sendet und hierfür zum unveränderten Senden des Datenabschnitts der Nachricht jedoch zum Senden einer ungültigen Prüfsumme in der Nachricht ausgestaltet ist.

Die beschriebene Teilnehmerstation kann Teil eines Bussystem zur Übertragung von Nachrichten zwischen Teilnehmerstationen sein, wobei mindestens eine der beschriebenen Teilnehmerstation vorhanden ist. Hierbei kann das Bussystem zur Übertragung von Daten mittels des CAN-Protokolls oder des CAN-FD-Protokolls ausgestaltet sein.

Die Aufgabe wird zudem durch ein Verfahren zur Übertragung von Nachrichten zwischen Teilnehmerstationen eines Bussystems mit den Merkmalen des Anspruchs 1 gelöst. Das Verfahren hat die Schritte: Lesen, mittels eines CAN-Controllers, von zu sendenden Daten einer Nachricht direkt aus einem RAM ohne Zwischenspeicherung in einem Zwischenspeicher, Erfassen eines Speicherzugriffsfehlers des CAN-Controllers mit einer Speicherzugriffsfehler-Erfassungs/Bearbeitungseinrichtung, und Bearbeiten eines erfassten Speicherzugriffsfehlers mit der Speicherzugriffsfehler-Erfassungs/Bearbeitungseinrichtung.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein vereinfachtes Blockdiagramm zur Veranschaulichung des Aufbaus einer in dem Bussystem gemäß dem ersten Ausführungsbeispiel gesendeten Nachricht;
Fig. 3 ein Flussdiagramm eines Verfahrens gemäß dem ersten Ausführungsbeispiel;
Fig. 4 ein Flussdiagramm eines Verfahrens gemäß einer Modifikation des ersten Ausführungsbeispiels;
Fig. 5 ein Flussdiagramm eines Verfahrens gemäß einem zweiten Ausführungsbeispiel;
Fig. 6 ein vereinfachtes Blockdiagramm zur Veranschaulichung des Aufbaus einer in dem Bussystem gemäß dem zweiten Ausführungsbeispiel im Fehlerfall gesendeten Nachricht;
Fig. 7 ein vereinfachtes Blockdiagramm zur Veranschaulichung des Aufbaus einer in dem Bussystem gemäß einer Modifikation des zweiten Ausführungsbeispiels im Fehlerfall gesendeten Nachricht;
Fig. 8 ein Flussdiagramm eines Verfahrens gemäß einem dritten Ausführungsbeispiel; und
Fig. 9 ein vereinfachtes Blockdiagramm zur Veranschaulichung des Aufbaus einer in dem Bussystem gemäß einem dritten Ausführungsbeispiel im Fehlerfall gesendeten Nachricht;

In den Figuren sind gleiche oder funktionsgleiche Elemente, sofern nichts anderes angegeben ist, mit denselben Bezugszeichen versehen.

### Beschreibung der Ausführungsbeispiele

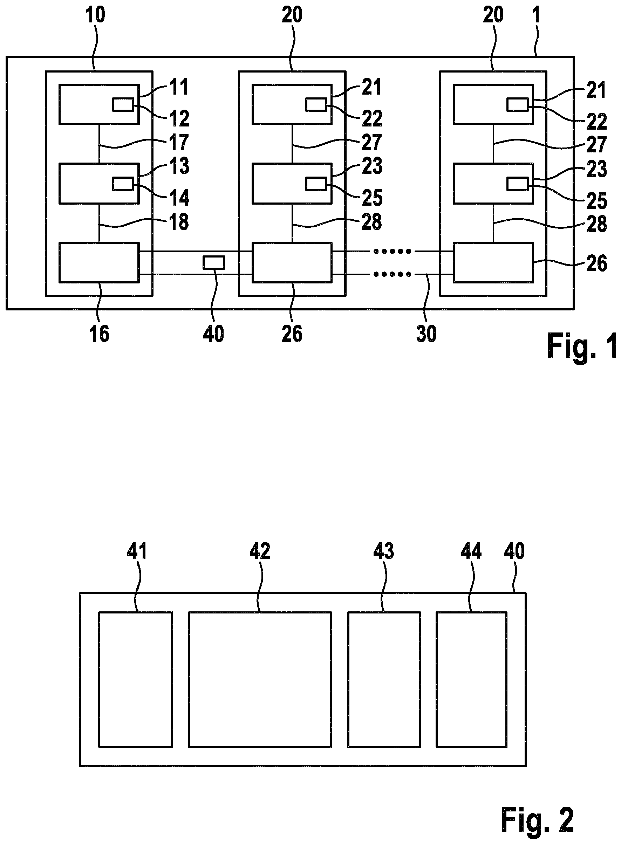

Fig. 1 zeigt ein Bussystem 1, das beispielsweise ein CAN-Bussystem sein kann, das in einem Fahrzeug, usw. oder im Krankenhaus usw. Verwendung finden kann. Das Bussystem 1 hat eine erste Teilnehmerstation 10, zwei zweite Teilnehmerstationen 20, und einen Bus 30, an welchen die erste und die zweiten Teilnehmerstationen 10, 20 angeschlossen sind und über welchen die erste und zweiten Teilnehmerstationen 10, 20 jeweils Nachrichten 40 senden und empfangen können.

In Fig. 1 haben die ersten Teilnehmerstationen 10 jeweils einen Mikrocontroller 11 mit einem RAM 12 (RAM = Random Access Memory = Speicher mit wahlfreiem Zugriff), eine CAN-Steuereinrichtung 13, die nachfolgend CAN-Controller 13 genannt wird und einen Zwischenspeicher 14 aufweist, und eine CAN-Sende-/Empfangseinrichtung 16, die nachfolgend CAN-Transceiver 16 genannt wird. Der Mikrocontroller 11 ist über eine Verbindung 17 mit dem CAN-Controller 13 verbunden. Der CAN-Controller 13 ist über eine Verbindung 18 mit dem CAN-Transceiver 16 verbunden. Über die Verbindungen 17, 18 können Daten zwischen dem Mikrocontroller 11, dem CAN-Controller 13 und dem CAN-Transceiver 16 ausgetauscht werden. Die Daten können über das Bussystem 1 bzw. den Bus 30 zu übertragende Nachrichten 40 und/oder Konfigurations-, Steuer- und Statusinformationen sein.

Zudem hat in Fig. 1 die zweite Teilnehmerstation 20 einen Mikrocontroller 21 mit einem RAM 22 (RAM = Random Access Memory = Speicher mit wahlfreiem Zugriff), eine CAN-Steuereinrichtung 23, die nachfolgend CAN-Controller 23 genannt wird und eine Speicherzugriffsfehler-Erfassungs/bearbeitungseinrichtung 25 umfasst, und eine CAN-Sende-/Empfangseinrichtung 26, die nachfolgend CAN-Transceiver 26 genannt wird. Der Mikrocontroller 21 ist über eine Verbindung 27 mit dem CAN-Controller 23 verbunden. Der CAN-Controller 23 ist über eine Verbindung 28 mit dem CAN-Transceiver 26 verbunden. Über die Verbindungen 27, 28 können Daten zwischen dem Mikrocontroller 21, dem CAN-Controller 23 und dem CAN-Transceiver 26 ausgetauscht werden. Wie bei der ersten Teilnehmerstation 10, können die Daten über das Bussystem 1 bzw. den Bus 30 zu übertragende Nachrichten 40 und/oder Konfigurations-, Steuer- und Statusinformationen sein.

Wie aus Fig. 1 ersichtlich, hat nur die erste Teilnehmerstation 10 einen Zwischenspeicher 14. Zudem haben nur die zweiten Teilnehmerstationen 20 eine Speicherzugriffsfehler-Erfassungs/bearbeitungseinrichtung 25. Die ersten Teilnehmerstationen 10 können somit eine Teilnehmerstation repräsentieren, welche nach dem Norm-CAN-Protokoll arbeitet. Demgegenüber können die zweite Teilnehmerstation 20 eine Teilnehmerstation repräsentieren, welche nach einem erweiterten CAN-Protokoll arbeitet, wie es nachfolgend beschrieben ist. Die Darstellung in Fig. 1, welche ein Bussystem zeigt, das sowohl wenigstens eine Teilehmerstation 10 gemäß Norm-CAN-Protokoll, als auch wenigstens eine Teilnehmerstation 20 gemäß einem erweiterten CAN-Protokoll umfasst, dient der Übersichtlichkeit. Selbstverständlich ist die Erfindung auch in einem Bussystem anwendbar, welches ausschließlich Teilnehmerstationen 20 gemäß einem erweiterten CAN-Protokoll umfasst oder welches keine Teilnehmerstation 10 gemäß Norm-CAN-Protokoll ausfweist.

Fig. 2 stellt stark vereinfacht den Aufbau einer Nachricht 40 dar, wie sie über den Bus 30 von einer der Teilnehmerstationen 10, 20 bei diesem Ausführungsbeispiel versendet wird. Die Nachricht 40 hat einen Aufbau und Inhalt gemäß dem CAN-Protokoll. Die Nachricht 40 hat einen Nachrichtenkopf 41, einen Datenabschnitt 42, einen Prüfsummenabschnitt 43 und einen Nachrichtendeabschnitt 44. Der Nachrichtenkopf 41 umfasst alle Daten, die bei einer Nachricht 40 gemäß dem CAN-Protokoll vor dem Datenabschnitt 42 angeordnet sind, das im CAN-Protokoll auch Data Field genannt wird. Der Datenabschnitt 42 umfasst die Daten, die von einer anderen Teilnehmerstation 10, 20 im Bus 30 für deren Funktion benötigt werden, wie beispielsweise Sensordaten, Zustandsdaten der jeweiligen Teilnehmerstation 10, 20 usw.. Der Prüfsummenabschnitt 43 umfasst die CRC Prüfsumme der Nachricht 40, die beim CAN-Protokoll auch CRC Checksumme genannt wird. Der Nachrichtendeabschnitt 44 umfasst alle Daten, die bei einer Nachricht 40 gemäß dem CAN-Protokoll nach dem Prüfsummenabschnitt 43 angeordnet sind.

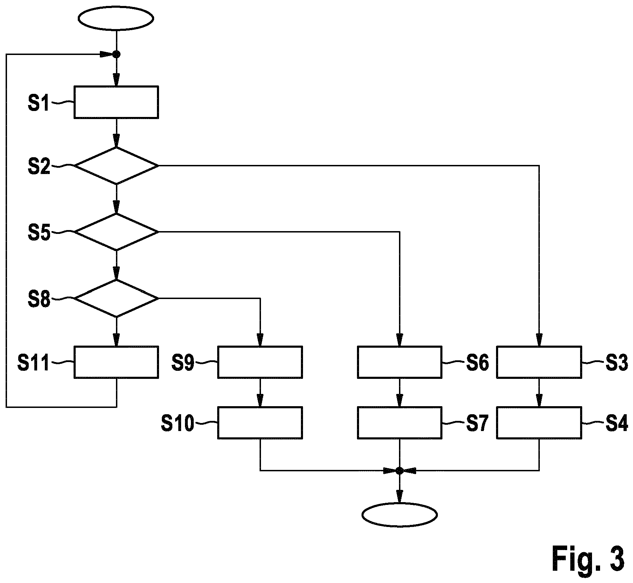

Fig. 3 zeigt das in jeder der Teilnehmerstationen 20 von dem CAN-Controller 23, genauer gesagt seiner Speicherzugriffsfehler-Erfassungs/bearbeitungseinrichtung 25, durchgeführte Verfahren. Nach dem Start des Verfahrens werden bei einem Schritt S1 die Daten einer zu sendenden Nachricht 40, also der Datenabschnitt 42, während einer laufenden Übertragung der Nachricht 40 vom Nachrichtenkopf 41 bis zum Nachrichtendeabschnitt 44 direkt aus dem RAM 22 gelesen, ohne vor Beginn der Übertragung in einem Zwischenspeicher gesammelt zu werden. Ein RAM- Speicherwort muss spätestens eine CAN Bit-Zeit erfolgreich aus dem RAM 22 ausgelesen worden sein, bevor das erste Bit dieses Speicherworts als Teil einer Nachricht 40, die auch als CAN-Frame bezeichnet werden kann, gesendet wird. Danach geht der Fluss zu einem Schritt S2 weiter.

Bei dem Schritt S2 wird von dem CAN-Controller 23, genauer gesagt seiner Speicherzugriffsfehler-Erfassungs/bearbeitungseinrichtung 25, geprüft, ob im RAM 22 ein Datenfehler, ein Parity-Fehler, erfasst wurde. Lautet die Antwort bei dem Schritt S2 JA, geht der Fluss zu einem Schritt S3 weiter.

Bei dem Schritt S3 setzt der CAN-Controller 23, genauer gesagt die Speicherzugriffsfehler-Erfassungs/bearbeitungseinrichtung 25, einen hierfür vorgesehenen Fehlertyp auf den Fehlertyp, welcher dem Parity-Fehler entspricht. Der Fehlertyp wird auch Error Typ genannt. Danach geht der Fluss zu einem Schritt S4 weiter.

Bei dem Schritt S4 ermittelt der CAN-Controller 23, genauer gesagt die Speicherzugriffsfehler-Erfassungs/bearbeitungseinrichtung 25, wie auf den Parity-Fehler reagiert werden soll und / oder leitet die vorgesehene vorbestimmte Maßnahme ein. Die vorbestimmte Maßnahme ist bei dem Schritt S4, dass die Speicherzugriffsfehler-Erfassungs/bearbeitungseinrichtung 25 bewirkt, dass der CAN-Controller 23 aufhört, dominante Bits auf den CAN-Bus 30 zu senden. Anders gesagt, der CAN-Controller 23 wechselt in die Busbeobachtungsbetriebsart, die auch Bus Monitoring Mode genannt wird. In der Busbeobachtungsbetriebsart kann der CAN-Controller 23 keine Übertragung starten und keine dominanten Bits senden, jedoch alle Nachrichten 40 empfangen. Danach ist das Verfahren beendet.

Der CAN-Controller 23 kann, nach einer Fehlerbehandlung, durch z.B. Software auf dem Microcontroller, wieder in eine aktive Betriebsart zurückgeschaltet werden, in der der CAN-Controller 23 auch wieder eine Übertragung starten und dominante Bits senden kann.

Lautet die Antwort bei dem Schritt S2 jedoch NEIN, geht der Fluss zu dem Schritt S5 weiter.

Bei dem Schritt S5 wird von dem CAN-Controller 23, genauer gesagt seiner Speicherzugriffsfehler-Erfassungs/bearbeitungseinrichtung 25, geprüft, ob das von dem CAN-Controller 23 gelesene RAM-Speicherwort rechtzeitig bereitgestellt wird, bevor das erste Bit dieses Speicherworts auf den CAN-Bus 30 gesendet wird. Ein nicht rechtzeitiges Bereitstellen kann auftreten, wenn beispielsweise mehrere Module, beispielsweise des CAN-Controllers 23, gleichzeitig auf das RAM 22 zugreifen wollen. Es wird also geprüft, ob kein zeitlicher Fehler vorliegt. Lautet die Antwort bei dem Schritt S5 NEIN, geht der Fluss zu einem Schritt S6 weiter.

Bei dem Schritt S6 setzt der CAN-Controller 23, genauer gesagt die Speicherzugriffsfehler-Erfassungs/bearbeitungseinrichtung 25, den hierfür vorgesehenen Fehlertyp auf den Fehlertyp, welcher dem zeitlichen Fehler entspricht. Danach geht der Fluss zu einem Schritt S7 weiter.

Bei dem Schritt S7 ermittelt der CAN-Controller 23, genauer gesagt die Speicherzugriffsfehler-Erfassungs/bearbeitungseinrichtung 25, wie auf den zeitlichen Fehler reagiert werden soll und / oder leitet eine vorgesehene vorbestimmte Maßnahme ein. Die vorbestimmte Maßnahme ist bei diesem Schritt S7 gleich derjenigen bei dem Schritt S4. Das heißt, die Speicherzugriffsfehler-Erfassungs/bearbeitungseinrichtung 25 bewirkt, dass der CAN-Controller 23 aufhört, dominante Bits auf den CAN-Bus 30 zu senden. Anders gesagt, der CAN-Controller 23 wechselt in die Busbeobachtungsbetriebsart. Danach ist das Verfahren beendet.

Lautet die Antwort bei dem Schritt S5 jedoch JA, geht der Fluss zu dem Schritt S8 weiter.

Bei dem Schritt S8 wird von dem CAN-Controller 23, genauer gesagt seiner Speicherzugriffsfehler-Erfassungs/bearbeitungseinrichtung 25, geprüft, ob der Inhalt der Nachricht 40 von einer Software der Teilnehmerstation 20 verändert wird, während die Übertragung im Gang ist. Eine solche Änderung ist problematisch, da dadurch die innere Datenkonsistenz der Nachricht 40 zerstört wird und es eine Mischung zwischen alten und neuen Datenbytes im Datenabschnitt 42 der Nachricht 40 gibt. Es wird also geprüft, ob ein Datenkonsistenzfehler vorliegt. Lautet die Antwort bei dem Schritt S8 JA, geht der Fluss zu einem Schritt S9 weiter.

Bei dem Schritt S9 setzt der CAN-Controller 23, genauer gesagt die Speicherzugriffsfehler-Erfassungs/bearbeitungseinrichtung 25, den hierfür vorgesehenen Fehlertyp auf den Fehlertyp, welcher dem Datenkonsistenzfehler entspricht. Danach geht der Fluss zu einem Schritt S10 weiter.

Bei dem Schritt S10 ermittelt der CAN-Controller 23, genauer gesagt die Speicherzugriffsfehler-Erfassungs/bearbeitungseinrichtung 25, wie auf den Datenfehler reagiert werden soll und / oder leitet die vorgesehene vorbestimmte Maßnahme ein. Die vorbestimmte Maßnahme ist bei diesem Schritt S10 gleich derjenigen bei den Schritten S4 und S7. Das heißt, die Speicherzugriffsfehler-Erfassungs/bearbeitungseinrichtung 25 bewirkt, dass der CAN-Controller 23 aufhört, dominante Bits auf den CAN-Bus 30 zu senden. Anders gesagt, der CAN-Controller 23 wechselt in die Busbeobachtungsbetriebsart. Danach ist das Verfahren beendet.

Lautet die Antwort bei dem Schritt S8 jedoch NEIN, geht der Fluss zu dem Schritt S11 weiter.

Bei dem Schritt S11 sendet der CAN-Controller 23 unverändert weiter. Danach geht der Fluss zu dem Schritt S1 zurück.

Natürlich kann die Reihenfolge der Prüfungsschritte S2, S5 und S8 in alternativen Ausführungsformen beliebig permutiert werden, sofern die Zuordnung der Prüfung (z.B. S2) zu Fehlertypbestimmung (z.B. S3) und Maßnahme (z.B. S4) erhalten bleibt. Dies gilt gleichermaßen für die im folgenden beschriebenen Ausführungsbeispiele.

Demzufolge ist bei diesem Ausführungsbeispiel das CAN-Protokoll folgendermaßen geändert. Zum einen wird ein neuer Error-Typ definiert, der z.B. "Data-Error" genannt wird und die oben beschriebenen Speicherzugriffsfehler repräsentiert. Zum anderen wird spezifiziert, wie auf diesen "Data-Error" reagiert werden soll. Auf diese Weise ist es möglich, dass ein CAN-Protokoll-Controller 23 eine laufende Übertragung abbricht. Empfänger, also andere Teilnehmerstationen 20, haben die Möglichkeit dies bzw. die fehlerhafte Nachricht 40 zu erkennen, auch wenn die Daten nicht noch z.B. durch einen Binnen-CRC im Datenfeld weiter geschützt sind.

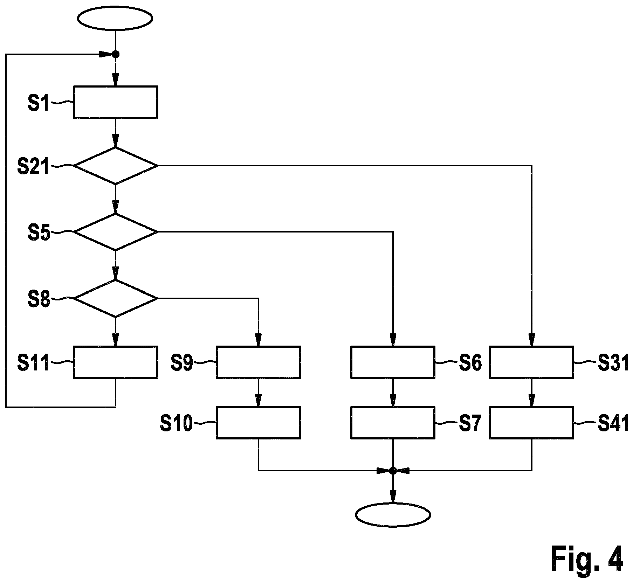

Fig. 4 zeigt eine Modifikation des Verfahrens des ersten Ausführungsbeispiels, bei welchem anstelle der Schritte S2, S3 und S4 des Verfahrens des ersten Ausführungsbeispiels die modifizierten Schritte S21, S31, S41 ausgeführt werden.

Bei einem Schritt S21, der ein modifizierter Schritt S2 ist, wird geprüft, ob ein nicht korrigierbarer ECC-Fehler (ECC = Error Correcting Code = Kodierung zur Fehlerkorrektur) erfasst wurde oder nicht. Bei dieser Kodierung zur Fehlerkorrektur können z.B. 1-Bit-Fehler korrigiert und 2-Bit-Fehler erkannt werden. Lautet die Antwort hier JA, geht der Fluss zu einem Schritt S31 weiter, der ein modifizierter Schritt S3 ist.

Bei dem Schritt S31 setzt der CAN-Controller 23, genauer gesagt die Speicherzugriffsfehler-Erfassungs/bearbeitungseinrichtung 25, dann den hierfür vorgesehenen Fehlertyp auf den Fehler, welcher dem ECC-Fehler entspricht. Danach geht der Fluss zu einem Schritt S41 weiter, der ein modifizierter Schritt S4 ist..

Bei dem Schritt S41 ermittelt der CAN-Controller 23, genauer gesagt die Speicherzugriffsfehler-Erfassungs/bearbeitungseinrichtung 25, wie auf den ECC-Fehler reagiert werden soll und / oder leitet die vorgesehene vorbestimmte Maßnahme ein. Die vorbestimmte Maßnahme ist bei dem Schritt S41 die gleiche Maßnahme wie bei dem Schritt S4, nämlich dass die Speicherzugriffsfehler-Erfassungs/bearbeitungseinrichtung 25 bewirkt, dass der CAN-Controller 23 aufhört, dominante Bits auf den CAN-Bus 30 zu senden. Anders gesagt, der CAN-Controller 23 wechselt in die Busbeobachtungsbetriebsart. Danach ist das Verfahren beendet.

Lautet die Antwort bei dem Schritt S21 jedoch NEIN, geht der Fluss zu dem Schritt S5 weiter. Für die weitere Beschreibung des Verfahrens dieser Modifikation des ersten Ausführungsbeispiels wird auf die Beschreibung des ersten Ausführungsbeispiels verwiesen.

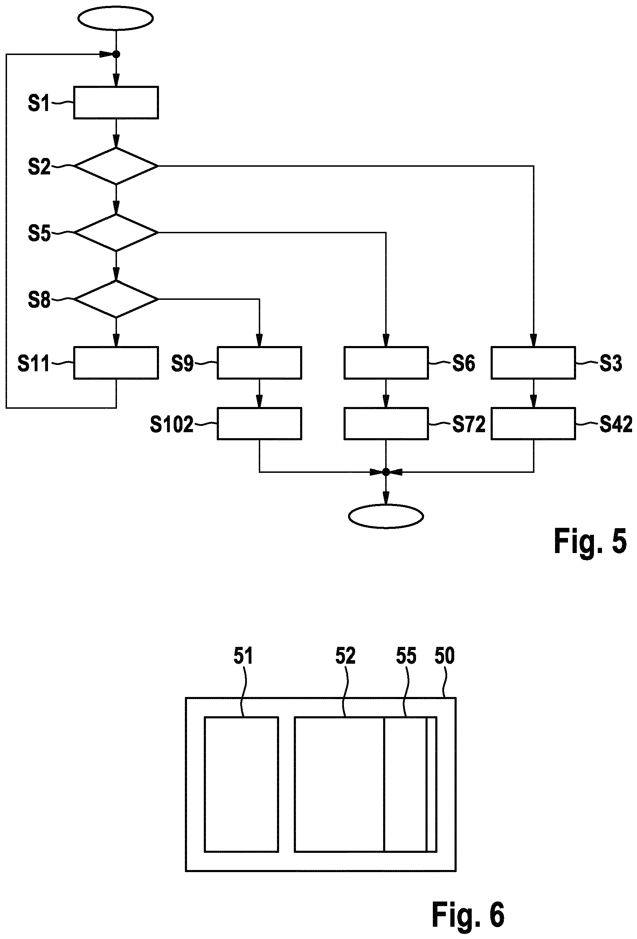

Fig. 5 zeigt ein Verfahren des zweiten Ausführungsbeispiels, bei welchem anstelle der Schritte S4, S7 und S10 des Verfahrens des ersten Ausführungsbeispiels die modifizierten Schritte S42, S72, S102 ausgeführt werden. Demzufolge werden nachfolgend nur die Unterschiede zum ersten Ausführungsbeispiel auch anhand von Fig. 6 beschrieben und im Übrigen auf die Beschreibung des ersten Ausführungsbeispiels verwiesen.

Fig. 6 stellt stark vereinfacht den Aufbau einer Nachricht 50 dar, wie sie über den Bus 30 von einer der Teilnehmerstationen 20 gemäß dem zweiten Ausführungsbeispiel im Fehlerfall versendet wird. Ansonsten werden weiter Nachrichten 40 versendet. Die Nachricht 50 hat einen Nachrichtenkopf 51, und einen Datenabschnitt 52. Hierbei hat der Nachrichtenkopf 51 den gleichen Aufbau wie der Nachrichtenkopf 41, der in Zusammenhang mit Fig. 2 beschrieben ist. Zusätzlich ist bei diesem Ausführungsbeispiel jedoch in den Datenabschnitt 52 ein Fehlerabschnitt 55 eingefügt, der auch Fehlerframe genannt wird. Fig. 6 illustriert schematisch eine beispielfafte Position des Fehlerframes innerhalb der Nachricht. Genauer gesagt wird der Datenabschnitt 52 anschließend an den Fehlerabschnitt 55 nicht fortgesetzt, sondern abgebrochen. Somit wird das Senden der Nachricht 40 später wiederholt.

Der Fehlerabschnitt 55 wird von dem CAN-Controller 23, genauer gesagt der Speicherzugriffsfehler-Erfassungs/bearbeitungseinrichtung 25, als vorbestimmte Maßnahme bei dem Schritt S42 und/oder dem Schritt S72 und/oder dem Schritt S102 des in Fig. 5 gezeigten Verfahrens in den Datenabschnitt 42 eingefügt. Ansonsten sind die S42, S72, S102 dieses Ausführungsbeispiels gleich den Schritten S4, S7 und S10 des Verfahrens des ersten Ausführungsbeispiels.

Der Datenabschnitt 42 ist demzufolge von dem Fehlerabschnitt 45 unterbrochen oder abgebrochen oder verfälscht. In diesem Fall kann jedoch die Nutzdatenrate in dem Bussystem 1 beeinträchtigt werden, da ein Abbruch der Übertragung den Fehler, wie beispielsweise schlechte Systemauslegung, nicht behebt. Daher wird der Fehler bei weiteren Übertragungsversuchen wieder auftreten. Aus diesem Grund wird das Wechseln in die Busbeobachtungsbetriebsart bevorzugt, wie bei dem ersten Ausführungsbeispiel und seiner Modifikation beschrieben.

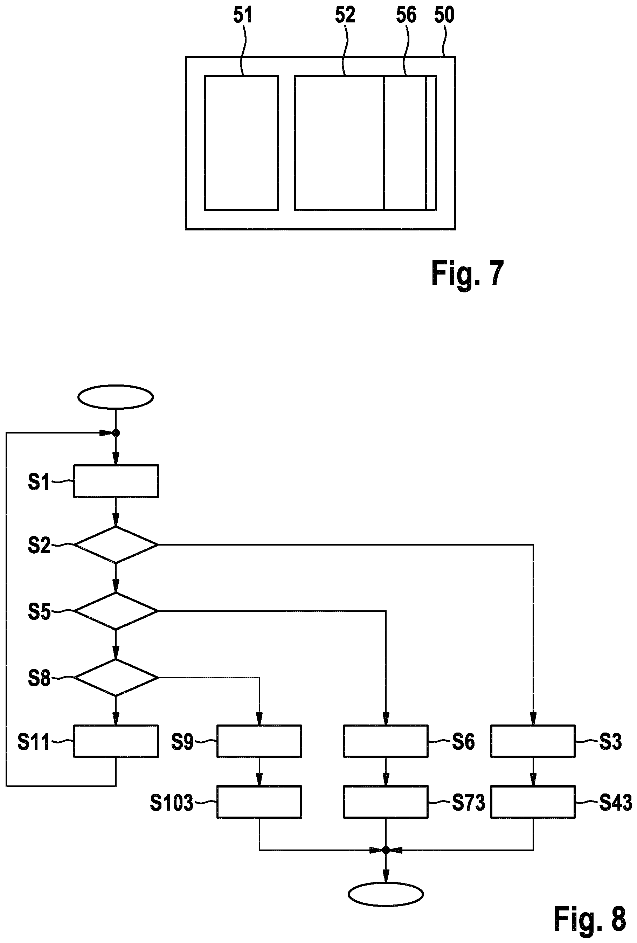

Fig. 7 zeigt stark vereinfacht den Aufbau einer Nachricht 50, wie sie über den Bus 30 von einer der Teilnehmerstationen 20 gemäß einer Modifikation des zweiten Ausführungsbeispiels im Fehlerfall versendet wird. Im Unterschied zum zweiten Ausführungsbeispiel ist hier in den Datenabschnitt 52 anstelle des Fehlerabschnitts 55 ein Überlastabschnitt 56 eingefügt, der auch Overloadframe genannt wird. Fig. 7 illustriert schematisch eine beispielfafte Position des Overloadframes innerhalb der Nachricht. Genauer gesagt, wird der Datenabschnitt 52 anschließend an den Überlastabschnitt 56 nicht fortgesetzt, sondern abgebrochen. Somit wird das Senden der Nachricht 40 später wiederholt. In allen anderen Aspekten ist die Modifikation des zweiten Ausführungsbeispiels gleich dem zweiten Ausführungsbeispiel.

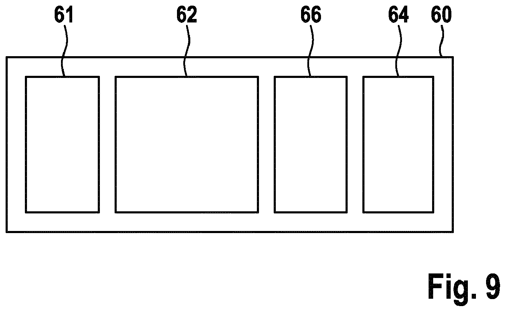

Fig. 8 zeigt ein Verfahren des dritten Ausführungsbeispiels, bei welchem anstelle der Schritte S4, S7 und S10 des Verfahrens des ersten Ausführungsbeispiels die modifizierten Schritte S43, S73, S103 ausgeführt werden. Demzufolge werden nachfolgend nur die Unterschiede zum ersten Ausführungsbeispiel auch anhand von Fig. 9 beschrieben und im Übrigen auf die Beschreibung des ersten Ausführungsbeispiels verwiesen.

Fig. 9 stellt stark vereinfacht den Aufbau einer Nachricht 60 dar, wie sie über den Bus 30 von einer der Teilnehmerstationen 20 gemäß dem dritten Ausführungsbeispiel im Fehlerfall versendet wird. Ansonsten werden weiter Nachrichten 40 versendet. Die Nachricht 60 hat einen Nachrichtenkopf 61, einen Datenabschnitt 62, einen Prüfsummenabschnitt 66 und einen Nachrichtendeabschnitt 64. Hierbei haben der Nachrichtenkopf 61, der Datenabschnitt 62 und der Nachrichtendeabschnitt 64 den gleichen Aufbau wie der Nachrichtenkopf 41, der Datenabschnitt 42 und der Nachrichtendeabschnitt 44 bei dem ersten Ausführungsbeispiel, die in Zusammenhang mit Fig. 2 beschrieben sind. Bei diesem Ausführungsbeispiel ist jedoch in den Prüfsummenabschnitt 66 eine verfälschte Prüfsumme geschrieben.

Dieses Schreiben der verfälschten Prüfsumme in den Prüfsummenabschnitt 66 wird von dem CAN-Controller 23, genauer gesagt der Speicherzugriffsfehler-Erfassungs/bearbeitungseinrichtung 25, als vorbestimmte Maßnahme bei dem Schritt S43 und/oder dem Schritt S73 und/oder dem Schritt S103 des in Fig. 9 gezeigten Verfahrens ausgeführt. Ansonsten sind die S43, S73, S103 dieses Ausführungsbeispiels gleich den Schritten S4, S7 und S10 des Verfahrens des ersten Ausführungsbeispiels.

Auch in diesem Fall kann jedoch die Nutzdatenrate in dem Bussystem 1 beeinträchtigt werden, da ein Schreiben einer falschen Prüfsumme den Fehler, wie beispielsweise schlechte Systemauslegung, nicht behebt. Daher wird der Fehler bei weiteren Übertragungsversuchen wieder auftreten. Aus diesem Grund wird das Wechseln in die Busbeobachtungsbetriebsart bevorzugt, wie bei dem ersten Ausführungsbeispiel und seiner Modifikation beschrieben.

Alle zuvor beschriebenen Ausgestaltungen der Teilnehmerstationen 10, 20 und des Verfahrens und des Bussystems 1 können einzeln oder in allen möglichen Kombinationen Verwendung finden. Zusätzlich sind insbesondere folgende Modifikationen denkbar.

Das zuvor beschriebene Bussystem 1 gemäß dem ersten bis dritten Ausführungsbeispiel ist anhand eines auf dem CAN-Protokoll basierenden Bussystems beschrieben. Das Bussystem 1 gemäß dem ersten bis dritten Ausführungsbeispiel kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10 auf einen gemeinsamen Kanal gewährleistet ist.

Das Bussystem 1 gemäß dem ersten bis dritten Ausführungsbeispiel ist insbesondere ein CAN-Netzwerk oder ein TTCAN-Netzwerk oder ein CAN FD-Netzwerk.

Die Anzahl und Anordnung der Teilnehmerstationen 10, 20 in den Bussystemen 1 des ersten bis dritten Ausführungsbeispiels ist beliebig. Insbesondere können auch nur Teilnehmerstationen 20 in den Bussystemen 1 des ersten bis dritten Ausführungsbeispiels vorhanden sein. In diesem Fall können alle Teilnehmerstationen 20 ungültige Nachrichten 40 erkennen.

Das RAM 12 und das RAM 22 können auch ein externes RAM sein und müssen nicht in den jeweiligen Teilnehmerstationen 10, 20, genauer gesagt ihren Mikrocontrollern 11, 21 integriert sein. In diesem Fall kann der zeitliche Fehler, dessen Vorliegen bei Schritt S5 geprüft wird, am wahrscheinlichsten auftreten. Ist das RAM 12 Teil des Mikrocontrollers 11 und das RAM 22 Teil des Mikrocontrollers 21, ist dagegen der zeitliche Fehler weniger wahrscheinlich.

Die vorbestimmten Maßnahmen bei den Schritten S4, S7, S10 des ersten Ausführungsbeispiels, den Schritten S41, S71, S101 der Modifikation des ersten Ausführungsbeispiels, den Schritten S42, S72, S102 des zweiten Ausführungsbeispiels, und den Schritten S43, S73, S103 des dritten Ausführungsbeispiels können auch bei einem Ausführungsbeispiel unterschiedlich sein. Sie sind beliebig aus den bei den Ausführungsbeispielen und ihren Modifikationen beschriebenen Maßnahmen kombinierbar.

## Patentansprüche

1. Teilnehmerstation (20) für ein Bussystem (1) zum Übertragen von Nachrichten mittels des CAN-Protokolls, mit
einem Mikrocontroller (21) mit einem RAM (22),
einem CAN-Controller (23) zum Lesen von zu sendenden Daten einer Nachricht (40) direkt aus dem RAM (22) ohne Zwischenspeicherung in einem Zwischenspeicher (14), und
einer Speicherzugriffsfehler-Erfassungs/Bearbeitungseinrichtung (25) zur Erfassung eines Speicherzugriffsfehlers (S2, S5, S8, S21) des CAN-Controllers (23) beim Lesen aus dem RAM und zur Bearbeitung eines erfassten Speicherzugriffsfehlers,
wobei die Speicherzugriffsfehler-Erfassungs/Bearbeitungseinrichtung (25) zur Bearbeitung des erfassten Speicherzugriffsfehlers (S2, S5, S8, S21) ausgestaltet ist, indem sie einen Fehlercode setzt (S3, S6, S9, S31), wobei der CAN-Controller (23) in eine Busbeobachtungsbetriebsart wechselt (S4, S7, S10, S41), wenn die Speicherzugriffsfehler-Erfassungs/Bearbeitungseinrichtung (25) den Fehlercode gesetzt hat, wobei hierfür der CAN-Controller zum Wechsel in die Busbeobachtungsbetriebsart ausgestaltet ist,
wobei in der Busbeobachtungsbetriebsart der CAN-Controller keine Übertragung starten und keine dominanten Bits senden, jedoch alle Nachrichten empfangen kann.

2. Teilnehmerstation (20) nach Anspruch 1, wobei der CAN-Controller nach einer Fehlerbehandlung wieder in eine aktive Betriebsart zurückgeschaltet wird, in der er wieder eine Übertragung starten und dominante Bits senden kann.

3. Teilnehmerstation (20) nach Anspruch 1 oder 2, wobei der Speicherzugriffsfehler ein Parity-Fehler im RAM (22) oder ein ECC-Fehler oder ein zeitlicher Fehler oder ein Datenkonsistenzfehler ist.

4. Teilnehmerstation (20) nach Anspruch 3, wobei der zeitliche Fehler ein Fehler ist, bei welchem ein von dem CAN-Controller (23) gelesenes RAM-Speicherwort nicht rechtzeitig bereitgestellt wird, bevor das erste Bit dieses Speicherworts auf einem CAN-Bus (30) des Bussystems (1) gesendet werden soll, und wobei der Datenkonsistenzfehler ein Fehler ist, bei welchem der Inhalt der Nachricht (40) von einer Software verändert wird, während das Senden der Nachricht (40) in Gang ist.

5. Bussystem (1) zur Übertragung von Nachrichten (40, 50, 60) zwischen Teilnehmerstationen (10, 20), mit mindestens einer Teilnehmerstation (20) nach einem der vorangehenden Ansprüche.

6. Bussystem (1) nach Anspruch 5, wobei das Bussystem (1) zur Übertragung von Daten (40) mittels des CAN-Protokolls oder des CAN-FD-Protokolls ausgestaltet ist.

7. Verfahren zur Übertragung von Nachrichten (40) mittels des CAN-Protokolls zwischen Teilnehmerstationen (10, 20) eines Bussystems (1), wobei mindestens eine Teilnehmerstation einen Mikrocontroller (21) mit einem RAM (22) sowie eine Speicherzugriffsfehler-Erfassungs/Bearbeitungseinrichtung (25) enthält, mit den Schritten:
Lesen (S1), mittels eines CAN-Controllers (23), von zu sendenden Daten einer Nachricht (40) direkt aus dem RAM (22) ohne Zwischenspeicherung in einem Zwischenspeicher (14),
Erfassen (S2, S5, S8, S21) eines Speicherzugriffsfehlers des CAN-Controllers (23) beim Lesen aus dem RAM mit der Speicherzugriffsfehler-Erfassungs/Bearbeitungseinrichtung (25),
Bearbeiten (S3, S4, S6, S7, S9, S10, S31, S41, S42, S43, S72, S73, S102, S103) des erfassten Speicherzugriffsfehlers mit der Speicherzugriffsfehler-Erfassungs/Bearbeitungseinrichtung, indem ein Fehlercode gesetzt wird (S3, S6, S9, S31),
Wechsel (S4, S7, S10, S41) in eine Busbeobachtungsbetriebsart, wenn die Speicherzugriffsfehler-Erfassungs/Bearbeitungseinrichtung (25) den Fehlercode gesetzt hat, wobei in der Busbeobachtungsbetriebsart der CAN-Controller keine Übertragung starten und keine dominanten Bits senden, jedoch alle Nachrichten empfangen kann.

8. Verfahren nach Anspruch 7, mit dem zusätzlichen Schritt:
Zurückschalten in eine aktive Betriebsart, in der der CAN-Controller wieder eine Übertragung starten und dominante Bits senden kann, nach einer Fehlerbehandlung.

9. Verfahren nach Anspruch 7 oder 8, wobei der Speicherzugriffsfehler ein Parity-Fehler im RAM (22) oder ein ECC-Fehler oder ein zeitlicher Fehler oder ein Datenkonsistenzfehler ist.

10. Verfahren nach Anspruch 9, wobei der zeitliche Fehler ein Fehler ist, bei welchem ein von dem CAN-Controller (23) gelesenes RAM-Speicherwort nicht rechtzeitig bereitgestellt wird, bevor das erste Bit dieses Speicherworts auf einem CAN-Bus (30) des Bussystems (1) gesendet werden soll, und wobei der Datenkonsistenzfehler ein Fehler ist, bei welchem der Inhalt der Nachricht (40) von einer Software verändert wird, während das Senden der Nachricht (40) in Gang ist.

## Claims

1. Subscriber station (20) for a bus system (1) for transmitting messages by means of the CAN protocol, having
a microcontroller (21) having a RAM (22),
a CAN controller (23) for reading data to be sent in a message (40) directly from the RAM (22) without buffer storage in a buffer store (14), and
a memory access error detection/processing device (25) for detecting a memory access error (S2, S5, S8, S21) of the CAN controller (23) when reading from the RAM and for processing a detected memory access error, wherein the memory access error detection/processing device (25) is configured to process the detected memory access error (S2, S5, S8, S21) by setting an error code (S3, S6, S9, S31), wherein the CAN controller (23) changes to a bus observation mode (S4, S7, S10, S41) if the memory access error detection/processing device (25) has set the error code,
wherein the CAN controller is configured to change to the bus observation mode for this purpose,
wherein the CAN controller cannot start a transmission and cannot send dominant bits but can receive all messages in the bus observation mode.

2. Subscriber station (20) according to Claim 1, wherein the CAN controller is switched back to an active mode again, in which it can start a transmission and send dominant bits again, after error handling.

3. Subscriber station (20) according to Claim 1 or 2, wherein the memory access error is a parity error in the RAM (22) or an ECC error or a timing error or a data consistency error.

4. Subscriber station (20) according to Claim 3, wherein the timing error is an error that involves a RAM memory word read by the CAN controller (23) not being provided in good time before the first bit of this memory word is supposed to be sent on a CAN bus (30) of the bus system (1), and wherein the data consistency error is an error that involves the content of the message (40) being altered by a piece of software while sending of the message (40) is in progress.

5. Bus system (1) for transmitting messages (40, 50, 60) between subscriber stations (10, 20), having at least one subscriber station (20) according to one of the preceding claims.

6. Bus system (1) according to Claim 5, wherein the bus system (1) is configured to transmit data (40) by means of the CAN protocol or the CAN FD protocol.

7. Method for transmitting messages (40) by means of the CAN protocol between subscriber stations (10, 20) of a bus system (1), wherein at least one subscriber station contains a microcontroller (21) having a RAM (22) and a memory access error detection/processing device (25), having the steps of:
reading (S1), by means of a CAN controller (23), data to be sent in a message (40) directly from the RAM (22) without buffer storage in a buffer store (14),
detecting (S2, S5, S8, S21) a memory access error of the CAN controller (23) when reading from the RAM by means of the memory access error detection/processing device (25),
processing (S3, S4, S6, S7, S9, S10, S31, S41, S42, S43, S72, S73, S102, S103) the detected memory access error by means of the memory access error detection/processing device by virtue of an error code being set (S3, S6, S9, S31),
changing (S4, S7, S10, S41) to a bus observation mode if the memory access error detection/processing device (25) has set the error code, wherein the CAN controller cannot start a transmission and cannot send dominant bits but can receive all messages in the bus observation mode.

8. Method according to Claim 7, having the additional step of:
switching back to an active mode, in which the CAN controller can start a transmission and send dominant bits again, after error handling.

9. Method according to Claim 7 or 8, wherein the memory access error is a parity error in the RAM (22) or an ECC error or a timing error or a data consistency error.

10. Method according to Claim 9, wherein the timing error is an error that involves a RAM memory word read by the CAN controller (23) not being provided in good time before the first bit of this memory word is supposed to be sent on a CAN bus (30) of the bus system (1), and wherein the data consistency error is an error that involves the content of the message (40) being altered by a piece of software while sending of the message (40) is in progress.

## Revendications

1. Station d'abonné (20) pour un système de bus (1) destiné à la transmission de messages au moyen du protocole CAN, comprenant
un microcontrôleur (21) muni d'une RAM (22),
un contrôleur de CAN (23) destiné à lire des données à envoyer d'un message (40) directement à partir de la RAM (22) sans mémorisation intermédiaire dans une mémoire intermédiaire (14) et
un dispositif de détection/traitement d'erreurs d'accès à la mémoire (25) destiné à détecter une erreur d'accès à la mémoire (S2, S5, S8, S21) du contrôleur de CAN (23) lors de la lecture depuis la RAM et à traiter une erreur d'accès à la mémoire détectée,
le dispositif de détection/traitement d'erreurs d'accès à la mémoire (25) étant configuré pour traiter l'erreur d'accès à la mémoire (S2, S5, S8, S21) détectée en définissant un code d'erreur (S3, S6, S9, S31), le contrôleur de CAN (23) basculant dans un mode de fonctionnement d'observation de bus (S4, S7, S10, S41) lorsque le dispositif de détection/traitement d'erreurs d'accès à la mémoire (25) a défini le code d'erreur, le contrôleur de CAN étant configuré à cet effet pour basculer dans le mode de fonctionnement d'observation de bus,
dans le mode de fonctionnement d'observation de bus, le contrôleur de CAN ne pouvant démarrer aucune transmission et envoyer aucun bit dominant, mais pouvant cependant recevoir tous les messages.

2. Station d'abonné (20) selon la revendication 1, le contrôleur de CAN étant, après le traitement d'une erreur, de nouveau commuté dans un état opérationnel actif dans lequel il peut de nouveau démarrer une transmission et envoyer des bits dominants.

3. Station d'abonné (20) selon la revendication 1 ou 2, l'erreur d'accès à la mémoire étant une erreur de parité dans la RAM (22) ou une erreur ECC ou une erreur temporelle ou une erreur de consistance des données.

4. Station d'abonné (20) selon la revendication 3, l'erreur temporelle étant une erreur avec laquelle un mot de mémoire RAM lu par le contrôleur de CAN (23) n'est pas fourni en temps voulu avant que le premier bit de ce mot de mémoire doive être envoyé sur un bus CAN (30) du système de bus (1), et l'erreur de consistance des données étant une erreur avec laquelle le contenu du message (40) est modifié par un logiciel pendant que l'envoi du message (40) est en cours.

5. Système de bus (1) destiné à la transmission de messages (40, 50, 60) entre des stations d'abonné (10, 20), comprenant au moins une station d'abonné (20) selon l'une des revendications précédentes.

6. Système de bus (1) selon la revendication 5, le système de bus (1) étant configuré pour la transmission de données (40) au moyen du protocole CAN ou du protocole CAN-FD.

7. Procédé de transmission de messages (40) au moyen du protocole CAN entre des stations d'abonné (10, 20) d'un système de bus (1), au moins une station d'abonné contenant un microcontrôleur (21) muni d'une RAM (22) ainsi qu'un dispositif de détection/traitement d'erreurs d'accès à la mémoire (25), comprenant les étapes suivantes :
lecture (S1), au moyen d'un contrôleur de CAN (23), de données à envoyer d'un message (40) directement à partir de la RAM (22) sans mémorisation intermédiaire dans une mémoire intermédiaire (14),
détection (S2, S5, S8, S21) d'une erreur d'accès à la mémoire du contrôleur de CAN (23) lors de la lecture depuis la RAM avec le dispositif de détection/traitement d'erreurs d'accès à la mémoire (25),
traitement (S3, S4, S6, S7, S9, S10, S31, S41, S42, S43, S72, S73, S102, S103) de l'erreur d'accès à la mémoire détectée avec le dispositif de détection/traitement d'erreurs d'accès à la mémoire en définissant un code d'erreur (S3, S6, S9, S31),
basculement (S4, S7, S10, S41) dans un mode de fonctionnement d'observation de bus lorsque le dispositif de détection/traitement d'erreurs d'accès à la mémoire (25) a défini le code d'erreur, le contrôleur de CAN, dans le mode de fonctionnement d'observation de bus, ne pouvant démarrer aucune transmission et envoyer aucun bit dominant, mais pouvant cependant recevoir tous les messages.

8. Procédé selon la revendication 7, comprenant l'étape supplémentaire suivante :
retour dans un état opérationnel actif, dans lequel le contrôleur de CAN peut de nouveau démarrer une transmission et envoyer des bits dominants après le traitement d'une erreur.

9. Procédé selon la revendication 7 ou 8, l'erreur d'accès à la mémoire étant une erreur de parité dans la RAM (22) ou une erreur ECC ou une erreur temporelle ou une erreur de consistance des données.

10. Procédé selon la revendication 9, l'erreur temporelle étant une erreur avec laquelle un mot de mémoire RAM lu par le contrôleur de CAN (23) n'est pas fourni en temps voulu avant que le premier bit de ce mot de mémoire doive être envoyé sur un bus CAN (30) du système de bus (1), et l'erreur de consistance des données étant une erreur avec laquelle le contenu du message (40) est modifié par un logiciel pendant que l'envoi du message (40) est en cours.
